# EUROPEAN PATENT APPLICATION

(11) **EP 3 171 146 A1**
(43) Date of publication of application: **24.05.2017**
(21) Application number: 15194897.3
(22) Date of filing: 17.11.2015
(51) Int. Cl.: G01L 1/18, G01L 1/20, G06F 3/041, G06F 3/045

(54) **SANDWICH-LIKE PRESSURE SENSITIVE SENSOR ARRAY**

(71) Applicant: Eidgenössische Materialprüfungs- und Forschungsanstalt EMPA, 8600 Dübendorf (CH)
(72) Inventor: Clemens, Frank, 8500 Frauenfeld (CH); Melnykowycz, Mark, 8406 Winterthur (CH)
(74) Representative: Schneider Feldmann AG Patent- und Markenanwälte

(57) **Abstract**

The disclosed invention shows a sandwich-like pressure sensitive sensor array, comprising a first electrically insulating fiber carrier (1) with at least one electrically conducting first fiber (2) and a second electrically insulating fiber carrier (5) with at least one electrically conducting second fiber (4), wherein the at least one first and second fibers (2, 4) are connectable to an electrical circuit, wherein the pressure sensitivity of the pressure sensitive layer array is tunable, enabling increased possibilities to reach desired sensitivity. This is reached because the first and second fibers (2, 4) are made of a piezoresistive material and the first and second fiber carriers (1, 5) are separated by at least one separator structure (3) in form of a hollow structure with defined thickness (h), comprising at least one chamber (30) with electrically insulating chamber walls (300) forming a cavity (301) with a given chamber diameter (d) in the area of overlap points (N).

## Description

### TECHNICAL FIELD

The present invention describes a sandwich-like pressure sensitive sensor array, comprising a first electrically insulating fiber carrier with at least one electrically conducting first fiber and a second electrically insulating fiber carrier with at least one electrically conducting second fiber, wherein the at least one first and second fibers are connectable to an electrical circuit and arranged in an orthogonal way building a row/column pattern providing a multiplicity of pathways with overlap points in an open state, where first and second fiber could be brought in electrical contact in a closed state, in which electrical currents and/or resistances of individual pathways across first and second fibers are measureable while a pressure respectively a force perpendicular to the pathways is applied. Also a production method of a sandwich-like pressure sensitive sensor array is described.

### STATE OF THE ART

Various approaches to pressure sensitive mats, sensor layers or more general pressure sensitive layer arrays for registering a pressure profile have been developed. Generally, such pressure sensitive mats are based on piezoelectric or dielectric layers sandwiched between orthogonal electrode patterns on the top and bottom of the sensor layer.

Alternatively, an array of individual pressure sensors such as the Force Sensing Resistors® (FSR) design is used today. Concerning FSR sensors, the design is composed of flat sensors based on conductive ink and interdigitated electrodes above the conductive layer with an air gap between the electrodes and the conductive layer. An applied pressure leads to a portion of the electrodes contacting the dielectric surface. As the surface area of the contacting electrodes increases, the electrical resistance of the sensor is reduced, defining the correlation between applied pressure and electrical resistance.

In a separate configuration, uniform electrodes on the top and bottom of the dielectric layer can be defined. During compression of the sensor, the dielectric layer between single electrodes is reduced in thickness and conductive particles are pushed closer to one another. This leads to a decrease in resistance with an increase in applied pressure. To create a pressure sensitive sheet or mat, many individual sensors must be placed and connected to a main measurement circuit. This approach requires a high number of individual sensors and is labor intensive.

In the case of dielectric material sandwiched between parallel rows of orthogonal electrodes, compression of the mat leads to a resistance change at specific electrode pathways (where electrodes cross), allowing for position and magnitude of the applied pressure to be determined. Such an approach is well-known for creating pressure sensitive mats in form of robotic skins (RSkin - Open Source Robot Skin http://www.instructables.com/id/rSkin-Open-Source-Robot-Skin/). Additionally US6216545 discloses a system with electrodes in a row/column orthogonal arrangement and a piezoresistive sensing layer. If arrays of discrete pressure sensors (such as the FSR design) are employed, then the mat will be expensive to produce and require a number of embedded electrical connections.

A pressure sensitive mat based on embedded flat piezoresistive pressure sensors has been disclosed in WO2003052368.

The use of a piezoresistive layer between layers of conductive fiber has been disclosed in US8161826. The sensors are not discrete and the fabrication is simplified by connection of the threads to at least one pair of flexible substrate sheets. The US20130091961 discloses a pressure sensitive layer array of separate orthogonal electrodes in a row/column arrangement, separated by a piezoresistive interlayer in which its electrical resistance changes in response to changing normal forces applied. Compression of different areas of the pressure sensitive sensor array then corresponds to closed electrical connections and therefore the relative position of the applied pressure. This setup shows a variety of different layers and uses a current signal due to changed piezoresistivity of the piezoresistive interlayer.

EP0206450A2 discloses a method of knitting or weaving conductive fibers so that under deformation conductive pathways are developed through the fabric based on the portion of fibers under a termed insulating versus electroconductive condition. Conductivity is essentially governed by the surface area contact between conductive fibers, as well as by the weaving approach taken in manufacture. Conductive warp yarns are woven with insulating weft yarns, so that under compression, the contact area between crossing conductive yarns increases, leading to an increase in conductivity. The response of the sensor is then dependent on the stiffness of the yarns, governing the responsiveness of the entire sensor array. A responsive tuning of the pressure sensitivity at the contact point of specific fiber junctions is not possible with this known setup. At nodes or contact points of warp and weft yarns, the yarns are always in contact. When woven conductive materials are employed, a non-conductive spacer layer could be used, which allows the layer to sense the position, but not the magnitude of an applied pressure.

### DESCRIPTION OF THE INVENTION

The object of the present invention is to create a pressure sensitive layer array, comprising crossing of electrically conducting fibers building different pathways, wherein the pressure sensitivity of the pressure sensitive layer array is tunable, enabling increased possibilities to reach desired sensitivity.

To solve this problem we focused on the combination of combining different conductive fibers or ribbons with at least one insulating separator structure as defined in claim 1.
Another possibility is the tunability of the sensitivity by the stiffness of one of the insulating carrier.

The sensitivity of the pressure sensitive layer array to an applied pressure may be tuned by the geometry of the at least one chamber in the separator structure. The need for additional electrode layers is removed, since the conductive fibers in form of piezoresistive fibers are used independently of additional electrode layers.

### BRIEF DESCRIPTION OF THE DRAWINGS

A preferred exemplary embodiment of the subject matter of the invention is described below in conjunction with the attached drawings.
- Figure 1a: shows a schematic exploded view of sectional view of a sandwich-like pressure sensitive sensor array, while
- Figure 1b: shows a schematic sectional view of the sandwich-like pressure sensitive sensor array according figure 1a in an open state, while
- Figure 1c: shows a schematic sectional view of the sandwich-like pressure sensitive sensor array according figure 1b in a closed state.
- Figure 1d: shows a schematic sectional view of the sandwich-like pressure sensitive sensor array according figure 1c in a deformed state.
- Figure 2: shows a schematic simplified perspective view of a sandwich-like pressure sensitive sensor array with a separator structure, comprising a multiplicity of chambers.

### DESCRIPTION

The invention comprises a sandwich-like pressure sensitive sensor array for measuring a pressure profile, usable for example as pressure sensitive surfaces or skins.

The sandwich-like pressure-sensitive sensor array is based on an orthogonal array of first electrically conductable piezoresistive fibers 2 fixed to or embedded in a first fiber carrier 1 and second electrically conductable piezoresistive fibers 4 fixed to or embedded in a second fiber carrier 5, wherein the piezoresistive fibers 2, 4 are connectable to an electrical measurement system respectively an electrical circuit, not shown in the figures. The electrical circuit is used to monitor the resistance of individual pathways (nodes) of the fibers 2, 4 through the pressure sensitive sensor array.

As piezoresistive fibers 2, 4 piezoresistive monofilament fibers 2, 4, in particular electrically conducting monofilament piezoresistive hybrid fibers 2, 4 are selected, in particular composed of Carbon Black (CB) and a Thermoplastic Elastomer (TPE) or Elastomer matrix. The Carbon Black is combined with Thermoplastic Elastomer or Elastomer Compounds. Beside this preferred selection other piezoresistive fibers 2, 4 are known and could be used.

The piezoresistive fibers 2, 4 can strain under compression of the sandwich-like pressure sensitive sensor array because of the deformation of the carrier 1, 5, which leads to an increase in resistance in the strained fiber pathway. This means that the pressure sensitive sensor array can determine the location and the magnitude of an applied pressure.

The piezoresistive fibers 2, 4 are at least partly fixed to the first fiber carrier 1 and the second fiber carrier 5, which can be done with tape or flexible glue, for example with Silicone. Alternative the first fibers 2 can be embedded on the edge of the carrier 1 and the second fiber 4 can be embedded on the edge of the carrier 5.
The first fiber carrier 1 and the second fiber carrier 5 are electrically insulating, for preventing short circuits. For reaching a soft sandwich-like pressure sensitive sensor array, at least one of the fiber carriers 1, 5 has to mechanically deform under mechanical loading along axis L. For a viscoelastic behavior both fiber carriers 1, 5 have to be mechanically deformable or compressible and should be made of an elastomer, saturated or unsaturated rubbers, thermoplastic elastomers (TPE) or foams. The fiber carriers 1, 5 can also be created of woven fabrics or knitted farbics.

The mechanical response of the fiber carriers 1, 5 also influences how the fibers 2, 4 deform under loading and the deformability of the fiber carriers 1, 5 can be used in tuning the specific response of the sandwich-like pressure sensitive sensor array to an applied pressure. The fiber carriers 1, 5 are made of an electrically insulating material, which can be rigid or soft.

Between the electrically insulation first fiber carrier 1 and second fiber carrier 5 at least one electrically insulating separator structure 3 in form of a hollow structure with defined thickness h is arranged. The separator structure 3 comprises at least one chamber 30 with electrically insulating chamber walls 300 forming at least one cavity 301 with a given chamber diameter d. The separator structure 3 is flexible, made of a flexible material respectively the hollow structure of a rigid material is made flexible.

In the mounted or assembled state of the sandwich-like pressure sensitive sensor array the first fiber 2 is crossing the chamber 30 and the chamber walls 300 at one side near the first fiber carrier 1, while the second fiber 4 is crossing the chamber 30 and chamber walls 300 on the opposite side, near the second fiber carrier 5. Due to the row/column pattern of first and second fibers 2, 4 there are defined overlap points N, where the distance between first and second fiber 2, 4 is minimal.
While a pressure respectively a force is applied, the fibers 2, 4 are strained in the cavity 301 respectively at the contact points between fibers 2, 4 and the chamber walls 300. In an open state of the sandwich-like pressure sensitive sensor array, there is no strain of the fibers 2, 4 and no electrical contact between them.

In the area of the overlap point N between first and second fibers 2, 4, at least one of the fibers 2, 4 can extend in direction of axis L into the chamber 301.

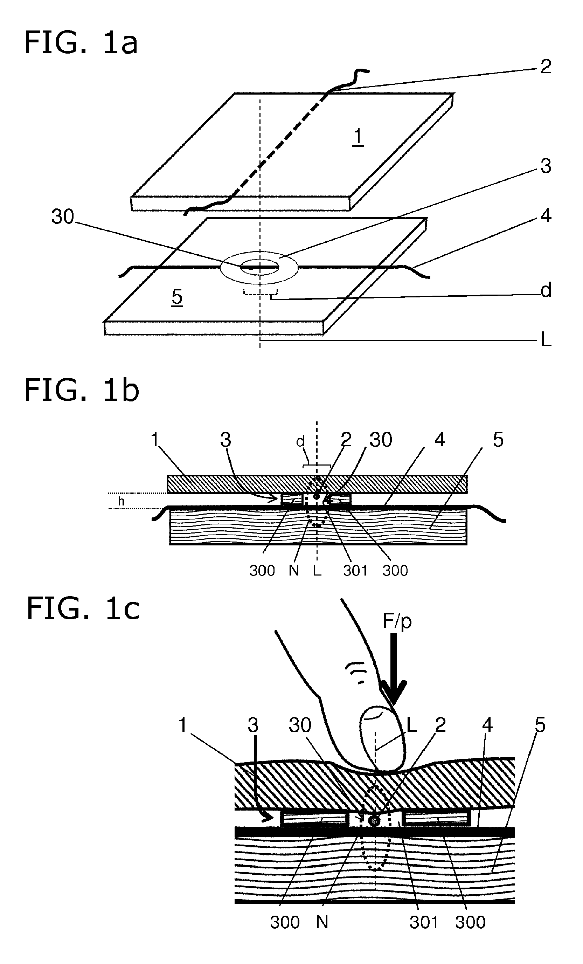

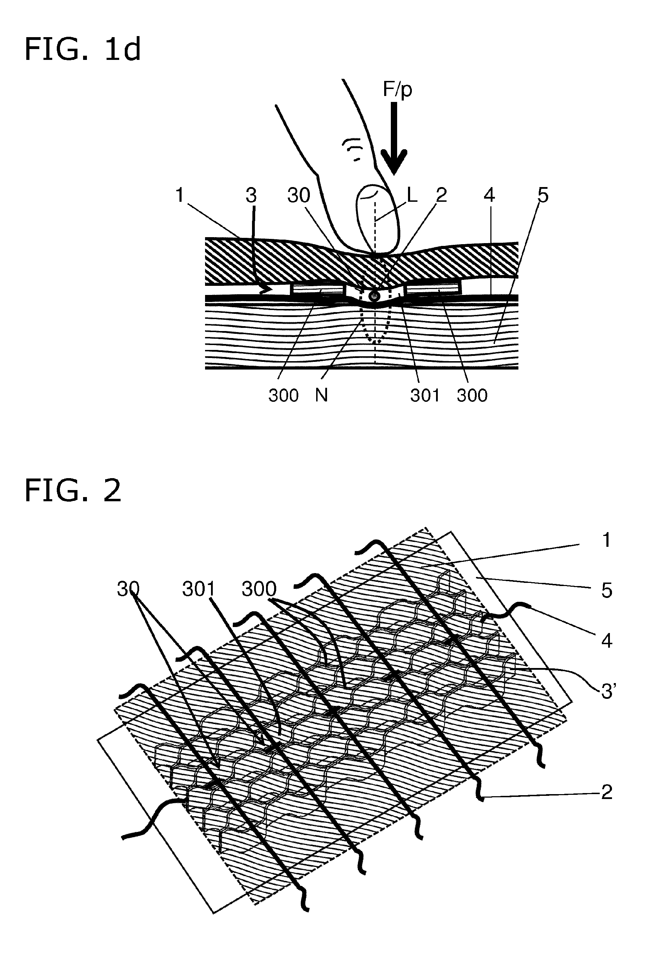

In the embodiment of figures 1 a multiplicity of small separator structure 3 with only one chamber 30 is used. These one chamber 30 separator structure 3 are each placed in the near of later overlap points N, fixed either to the first fiber carrier 1 or second fiber carrier 5, here the separator structure 3 is fixed to the second fiber carrier 5.

As depicted in figures 1 the separator structure 3 shows a ringshape or a hollow cylinder shape. The chamber walls 300 are ring walls 300 with a circular cavity 301 and a circular ring diameter d. In practice these separator structures 3 with its chambers 30 are spread between both fiber carriers 1, 5 as an intermediate layer at the later overlap points N of the fibers 2, 4.

The separator structure 3 is electrically insulating and can be made of soft or stiff or rigid material, due to the desired sensitivity of the complete sensor array. Any insulating plastic material can be chosen, for example PVC or silicone rubber. Also polymers like TPE, PLA, Nylon, ABS, PP, etc. are usable. Preferably, a stiffer material is used than the substrate so as to improve the responsiveness when the applied force is removed.

By applying a yield pressure respectively a yield force in direction of axis L, the fibers 2, 4 are stretched or strained due to an interaction between the chamber walls 300 and the fibers 2, 4, which affects the electrical resistance of the fibers 2, 4.
This change in electrical resistance is measured and can be used for determination of the force/pressure. The yield pressure respectively the yield force can be tuned by the stiffness of the carrier 1 and 5 or the separator 3.

If one fiber 2, 4 reaches the other 4, 2 an electrical contact is possible due to the applied pressure in the area of the overlap point N. This is the closed state of the sandwich-like pressure sensitive sensor array.

In figure 1c and 1d an embodiment of the sandwich-like pressure sensitive sensor array with compressible first fiber carrier 1 and a compressible separator structure 3 respectively a compressible chamber 30 and a rigid second fiber carrier 5 is shown, while pressure p is applied in direction of the axis L as vertical force F. The height h of the chamber 30 is decreased by the yield pressure p and electrical contact is achieved between fibers 2, 4 at a sensor node. This creates an electrical pathway with a certain electrical resistance, therefore the location of that sensor node can be determined.

Due to the stretching of the fibers 2, 4 by deformation of the carrier 1, 5, or both at the chamber walls 300 in the area of the cavity 301, an increased electrical resistance in any fiber 2, 4 can be measured. The fibers strain leads to an increase in resistance of the pathway. This allows the relative magnitude increase of the applied force or pressure to be determined.

The chamber 30 is in particular made of plastic material, with a circular hole with chamber diameter d. The size of the chamber diameter d and the thickness h of the chamber 30 highly influences the force required to close the sensor connection between both fibers 2, 4. The fibers 2, 4 should be preferentially locally fixed at the chamber walls 300 or near the edge of the chamber walls 300.

### Adjustment of sensitivity

For adjustment of the measurement sensitivity thickness h of the chamber 30, chamber diameter d of the chamber and the stiffness of the chamber walls 300 can be modified.
Also the stiffness of the first fiber carrier 1 and/or the second fiber carrier 5 influences the range of pressure force which can be measured. Beside the possibility to tune the sensitivity of the pressure sensitive sensor array by manipulating the form and structure of the separator structure 3 the stiffness of the fiber carrier 1, 5 material can be adjusted.
A smaller chamber diameter d increases the force required to compress the fibers 2, 4 and to make the fibers 2, 4 touch. A stiffer or more rigid material of the separator structure 3 improves material and signal recovery after removing the applied force.

Another possible design of the separator structure 3' is depicted in figure 2. The electrically insulating separator structure 3' is inserted between first and second fiber carriers 1, 5 and shows a hollow structure with a multiplicity of chambers 30. While one piezoresistive second fiber 4 is running between second fiber carrier 5 and the separator structure 3' in a row, a multiplicity of piezoresistive first fibers 2 is running between the separator structure 3' and the first fiber carrier 1 in columns. The material of the separator structure 3' can also be selected as stated above, while the hollow structure can show chambers 30 with hexagonal cross-sectional area. Also other layouts of the cross-sectional area of the chambers 30 are possible. In contrast to the use of individual chambers 30, which have to be arranged between both fiber carriers 1, 5, the hollow structure comprising a multiplicity of chambers 30 can be arranged more easily.

Due to the fact, that fiber carriers 1, 5 are made of an electrically insulating material, the separator structure 3, 3' could form part of one of the fiber carriers 1, 5. For example with 3d print techniques an electrically insulating second fiber carrier 5 with a hollow structure in at least a part of the second fiber carrier 5 can be printed. The separator structure 3, 3' and the second fiber carrier 5 can be produced monolithically.

The separator structure 3, 3' as part of the second fiber carrier 5 will be facing the first fiber carrier 1 in the later sandwich-like pressure sensitive sensor array, wherein the at least one piezoresistive second fiber 4 is fed through the second fiber carrier 5 respectively the hollow structure. This second fiber 4 faces the first fiber carrier 1 and the first fiber 2. Again it has to be possible, that first and second fibers 2, 4 are strained at the edges of the chambers 30 respectively at the chamber walls 300, while a pressure is applied and can come in electrical contact, if the pressure exceeds a yield. The first fiber 2 can at least partly extend into the chamber 30 of the integrated separator structure 3. In case the separator structure 3, 3' is integrated in the second fiber carrier 5, a detachable connection of the second fiber 4 at the second fiber carrier 5 is preferred.

Due to the fact, that the thickness h of the chambers 30 and the chamber diameters d defining the pressure magnitude sensitivity of each individual sensor node, theses parameters may vary for different chambers 30 distributed over the surface of the pressure sensitive sensor array. In this way different parts of the pressure sensitive sensor array may have different pressure level sensitivities.

With regard to the State of the Art, the need for separate orthogonal electrode layers is removed, and additionally the sensitivity of the pressure sensitive sensor array can be tuned geometrically by modifying the thickness h of the separator structure 3 respectively the thickness h of the chamber 30 and the chamber diameter d and by the stiffness of the chamber walls 300 respectively the stiffness of the separator structure 3 at least at the positions of the overlapping points N.

The separator structure 3 with individual chambers 30 can for example be manually placed and fixed on the second fiber carrier 5 by hand at the later overlap points of the fibers 2, 4.

With 3d print technology fiber carriers 1, 5 and/or the separator structure 3, 3' can be produced in a printing procedure. If desired the fiber carriers 1, 5 and the separator structure 3, 3' can be formed as hollow deformable and resettable structures. With this technology at least one fiber carrier and the separator structure 3, 3' can be produced monolithically. After the production, the fibers 2, 4 can be fed through the hollow structures or can be fixed, at least partly with tape or flexible glue/adhesive.

The separator structure 3, 3' and the second fiber carrier 5 could also be produced by casting process, injection molding process or print technologies. A monolithically production is also possible.

### LIST OF REFERENCE NUMERALS

1 first fiber carrier
2 first fiber
3 separator structure (insulating, elastically compressible)
30 chamber
h thickness of chamber/separator structure
d chamber diameter
300 chamber wall
301 cavity
4 second fiber (piezoresistive / monofilament)
5 second fiber carrier (rigid or soft/viscoelastic)
L axis
N overlap point

## Claims

1. Sandwich-like pressure sensitive sensor array, comprising a first electrically insulating fiber carrier (1) with at least one electrically conducting first fiber (2) and a second electrically insulating fiber carrier (5) with at least one electrically conducting second fiber (4), wherein the at least one first and second fibers (2, 4) are connectable to an electrical circuit and arranged in an orthogonal way building a row/column pattern providing a multiplicity of pathways with overlap points (N) in an open state, where first and second fiber (2, 4) bringable in electrical contact in a closed state, in which electrical currents and/or resistances of individual pathways across first and second fibers (2, 4) are measureable while a pressure respectively a force perpendicular to the pathways is applied,
**characterized in that**
the first and second fibers (2, 4) are formed stretchable made of a piezoresistive material and
the first and second fiber carriers (1, 5) are separated by at least one separator structure (3) in form of a hollow structure with defined thickness (h), comprising at least one chamber (30) with electrically insulating chamber walls (300) forming a cavity (301) with a given chamber diameter (d) in which at least one of the first or second fiber (2, 4) is extendable in direction of axis (L) in the area of the overlap points (N) between first and second fibers (2, 4) into the cavity (301), enabling strain on first and/or second fiber (2, 4) in the near of the chamber walls (300) and/or electrical contact between the fibers (2, 4) in the closed state of the fibers (2, 4) while a pressure is applied.

2. Sandwich-like pressure sensitive sensor array according to claim 1, wherein the chamber (30) respectively the chamber walls (300) are mechanically compressible in direction of axis (L).

3. Sandwich-like pressure sensitive sensor array according to claim 1, wherein the first fiber carrier (1) and/or the second fiber carrier (5) are mechanically deformable under mechanical loading along axis (L), in particular made of an elastomer, saturated or unsaturated rubbers, thermoplastic elastomers (TPE) or foams.

4. Sandwich-like pressure sensitive sensor array according to one of the preceding claims, wherein the first fibers (2) are fixed to the first carrier (1) and/or second fibers (4) are fixed to the second fiber carrier (5) at least partly with tape, adhesive or flexible glue.

5. Sandwich-like pressure sensitive sensor array according to one of the preceding claims, wherein a multiplicity of separator structures (3) each having one chamber (30) with electrically insulating chamber walls (300) forming a cavity (301) with a fix chamber diameter (d) are spread across the second fiber carrier (5) each in the area of the overlap points (N) between first and second fibers (2, 4).

6. Sandwich-like pressure sensitive sensor array according to one of the claims 1 to 4, wherein the separator structure (3) comprising a multiplicity of chambers (30) forming the hollow structure.

7. Sandwich-like pressure sensitive sensor array according to one of the preceding claims, wherein the separator structure (3) in form of the hollow structure is integrated in the second fiber carrier (5) forming part of the second fiber carrier (5), wherein the second fiber (4) is fed through the second fiber carrier (5) respectively the hollow structure.

8. Sandwich-like pressure sensitive sensor array according to one of the claims 6 or 7, wherein the first fiber (2) is fixed to the first carrier (1) and the second fiber (4) is threaded through the at least one chamber (30) crossing the chamber walls (300) and the cavity (301), in particular by a needle.

9. Production method of a sandwich-like pressure sensitive sensor array according to one of the preceding claims, wherein at least the second fiber carrier (5) is produced by a 3d-printing process forming the separator structure (3) as hollow structure integrated in the second fiber carrier (5), before the second fiber (4) is threaded through the at least one chamber (30) crossing the at least one cavity (301) and/or chamber walls (300) providing a detachable connection of the second fiber (4) in the second fiber carrier (5).

10. Production method of a sandwich-like pressure sensitive sensor array according to claim 9, wherein the separator structure (3, 3') and the second fiber carrier (5) are produced monolithically in one 3d-printing step.

11. Production method according to one of the claims 9 to 10, wherein the hollow structure of the separator structure (3, 3') is elastically deformable.
